# EUROPEAN PATENT APPLICATION

(11) **EP 4 443 978 A2**
(43) Date of publication of application: **09.10.2024**
(21) Application number: 24168492.7
(22) Date of filing: 04.04.2024
(51) Int. Cl.: H04W 48/16, H04W 52/02

(54) **PRECISE NETWORK SEARCHING FOR TERRESTRIAL BASE STATIONS**

(30) Priority: 05.04.2023 US 202318131039
(71) Applicant: T-Mobile Innovations LLC, Overland Park, KS 66251 (US)
(72) Inventor: OZOZLU, Akin, McLean 22102 (US); MANSOUR, Nagi A., Arlington 22207 (US); HART, Kevin Almon, Sammamish 98075 (US)
(74) Representative: Suddaby, Mark Edward

(57) **Abstract**

Embodiments of the present disclosure are directed to systems and methods for improved cell search of terrestrial base stations. Using a dataset of anticipated coverage areas associated with one or more terrestrial base stations locally stored on a user equipment (UE) and a location of the UE, the UE can determine if it is within a predetermined threshold distance of the one or more anticipated coverage areas. If so, the UE may perform cell search for the one or more terrestrial base stations; if not, the UE may not perform cell search or perform cell search less often to prevent unnecessary battery depletion.

## Description

### SUMMARY

The present disclosure is directed to improving cell search procedures for use with terrestrial base stations, substantially as shown and/or described in connection with at least one of the Figures, and as set forth more completely in the claims.

According to various aspects of the technology, a user equipment actively searches for a network when it anticipates that it is located within an area of anticipated coverage by one or more terrestrial base stations. Cell search, selection, and reselection are some of the most intensely battery-consuming activities a UE can perform in a modern telecommunications network. Though most populated areas today have at least nearly ubiquitous cellular coverage, there are many times when a UE may depart said areas and consequently search for a terrestrial base station to select and attach. By performing active cell searching when a UE anticipates coverage, the UE will realize significant power conservation by way of less processing resource utilization.

This summary is provided to introduce a selection of concepts in a simplified form that are further described below in the detailed description. This summary is not intended to identify key features or essential features of the claimed subject matter, nor is it intended to be used in isolation as an aid in determining the scope of the claimed subject matter.

### BRIEF DESCRIPTION OF THE DRAWINGS

Aspects of the present disclosure are described in detail herein with reference to the attached Figures, which are intended to be exemplary and non-limiting, wherein:
Fig. 1 illustrates an exemplary computing device for use with the present disclosure;
Fig 2. illustrates an exemplary environment in which implementations of the present disclosure may be employed;
Fig. 3. illustrates an exemplary environment in which implementations of the present disclosure may be employed; and
Fig. 4 depicts a flow diagram of an exemplary method for efficient cell searching, in accordance with embodiments described herein.

### DETAILED DESCRIPTION

The subject matter of embodiments of the invention is described with specificity herein to meet statutory requirements. However, the description itself is not intended to limit the scope of this patent. Rather, the inventors have contemplated that the claimed subject matter might be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

Various technical terms, acronyms, and shorthand notations are employed to describe, refer to, and/or aid the understanding of certain concepts pertaining to the present disclosure. Unless otherwise noted, said terms should be understood in the manner they would be used by one with ordinary skill in the telecommunication arts. An illustrative resource that defines these terms can be found in Newton's Telecom Dictionary, (e.g., 32d Edition, 2022). As used herein, the term "base station" refers to a centralized component or system of components that is configured to wirelessly communicate (receive and/or transmit signals) with a plurality of stations (i.e., wireless communication devices, also referred to herein as user equipment (UE(s))) in a particular geographic area. As used herein, an terrestrial base station is distinguished from a terrestrial base station on the basis of its lack of ground coupling; some examples of terrestrial base stations include airborne (e.g., on an aircraft or airship) and satellites (e.g., low earth orbit (LEO), medium earth orbit (MEO), and geostationary orbit (GEO)). As used herein, the term "network access technology (NAT)" is synonymous with wireless communication protocol and is an umbrella term used to refer to the particular technological standard/protocol that governs the communication between a UE and a base station; examples of network access technologies include 3G, 4G, 5G, 6G, 802.11x, and the like.

Embodiments of the technology described herein may be embodied as, among other things, a method, system, or computer-program product. Accordingly, the embodiments may take the form of a hardware embodiment, or an embodiment combining software and hardware. An embodiment takes the form of a computer-program product that includes computer-useable instructions embodied on one or more computer-readable media that may cause one or more computer processing components to perform particular operations or functions.

Computer-readable media include both volatile and nonvolatile media, removable and nonremovable media, and contemplate media readable by a database, a switch, and various other network devices. Network switches, routers, and related components are conventional in nature, as are means of communicating with the same. By way of example, and not limitation, computer-readable media comprise computer-storage media and communications media.

Computer-storage media, or machine-readable media, include media implemented in any method or technology for storing information. Examples of stored information include computer-useable instructions, data structures, program modules, and other data representations. Computer-storage media include, but are not limited to RAM, ROM, EEPROM, flash memory or other memory technology, CD-ROM, digital versatile discs (DVD), holographic media or other optical disc storage, magnetic cassettes, magnetic tape, magnetic disk storage, and other magnetic storage devices. These memory components can store data momentarily, temporarily, or permanently.

Communications media typically store computer-useable instructions - including data structures and program modules - in a modulated data signal. The term "modulated data signal" refers to a propagated signal that has one or more of its characteristics set or changed to encode information in the signal. Communications media include any information-delivery media. By way of example but not limitation, communications media include wired media, such as a wired network or direct-wired connection, and wireless media such as acoustic, infrared, radio, microwave, spread-spectrum, and other wireless media technologies. Combinations of the above are included within the scope of computer-readable media.

By way of background, before a user equipment (UE) can select and attach to a cellular base station, it must identify available base stations by way of searching frequencies available to the UE. Cell search is resource intensive, often requiring the UE to tune to a broad range of frequencies, monitor the frequency, and decode any observed signals. In areas where cellular coverage is readily available, the amount of cell searches performed by the UE is limited; if a cell search successfully results in the decoded signals from one or more base stations, the UE can begin the cell selection/re-selection procedure. On the other hand, many areas have limited cellular coverage, and coverage gaps between base stations can occur because of limited deployment of base stations, RF conditions, and outages. Persistent or repeated cell searching without connection to an external power supply or frequent re-charging rapidly depletes the limited battery capacity of the UE.

Conventionally, when UEs continually fail to identify a base station with a cell search, they are configured to repeat the cell search according to a predetermined schedule. In some cases, UEs are configured to perform cell search at fixed intervals. Scanning at shorter intervals decreases the time required for the user equipment to find a cell to camp on, but increases power consumption. Scanning at longer intervals conserves limited UE power but may result in taking longer to find a cell. In some cases, UEs are configured to have variable scanning intervals, wherein the longer the UE has unsuccessfully searched for a base station, the longer the time between subsequent scans. Particularly when a UE has spent an appreciable amount of time beyond wireless coverage and the UE passes through a coverage area of a terrestrial base station, the UE can miss an opportunity to search, select, and attach to/camp on the terrestrial base station.

In order to facilitate connectivity between a UE and a terrestrial base station, the present disclosure is directed to systems and methods for improved cell search. Unlike conventional solutions, the present disclosure queries a locally stored dataset in order to determine if the UE is located in or near enough to an terrestrial base station such that performing cell search is likely to be successful. By using a targeted cell search procedure instead of performing it according to a fixed configuration, the UE will conserve battery power by not searching at a time/location where it is unlikely to succeed, yet improve the likelihood of attaching to an terrestrial base station.

Accordingly, a first aspect of the present disclosure is directed to a system for coverage-based cell searching comprising one or more antennas configured to receive downlink signals from a base station, and one or more computer processing components. The one or more computer processing components are configured to perform operations comprising determining a location of the UE. The one or more computer processing components are further configured to query a dataset stored locally on the UE comprising an anticipated coverage area associated with a terrestrial base station. The one or more computer processing components are further configured to perform a cell search procedure based on a determination that the location of th UE is within a predetermined threshold distance of the anticipated coverage area associated with the terrestrial base station.

A second aspect of the present disclosure is directed to a method for cell searching. The method comprises a planned route of a user equipment (UE). The method further comprises creating a dataset and storing it locally on the UE, wherein the dataset comprises an anticipated coverage area associated with a terrestrial base station, wherein the anticipated coverage area at least partially overlaps the planned route. The method further comprises determining a location of the UE along the planned route. The method further comprises determining, based on a query of the dataset stored locally on the UE, the location of the UE is within a predetermined threshold distance of the anticipated coverage area associated with the terrestrial base station. The method further comprises performing a cell selection procedure.

According to another aspect of the technology described herein, a method for performing cell search in a wireless telecommunication network is presented. The method comprises determining a location of a user equipment (UE). The method further comprises querying a dataset stored locally on the UE that comprises an anticipated coverage area associated with a terrestrial base station. The method further comprises not performing the cell search procedure for the terrestrial base station based on a determination that the UE is within the anticipated coverage area, that the terrestrial base station is associated with a network identifier that is different than a home network identifier associated with the UE, and that the UE is not actively attempting to setup an emergency call. The method further comprises performing the cell search procedure for the terrestrial base station based on a determination that the UE is within the anticipated coverage area and that the UE is actively attempting to setup an emergency call.

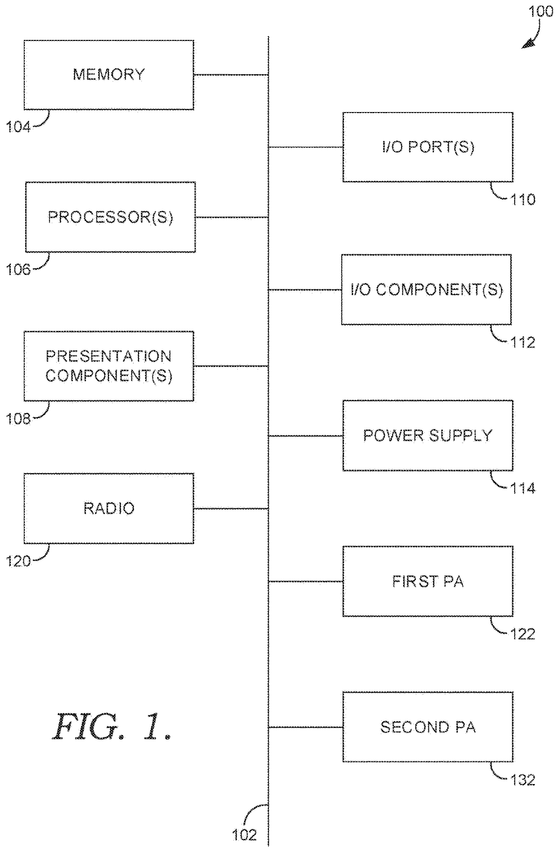

Referring to FIG. 1, an exemplary computer environment is shown and designated generally as computing device 100 that is suitable for use in implementations of the present disclosure. Computing device 100 is but one example of a suitable computing environment and is not intended to suggest any limitation as to the scope of use or functionality of the invention. Neither should computing device 100 be interpreted as having any dependency or requirement relating to any one or combination of components illustrated. In aspects, the computing device 100 is generally defined by its capability to transmit one or more signals to an access point and receive one or more signals from the access point (or some other access point); the computing device 100 may be referred to herein as a user equipment, wireless communication device, or user device, The computing device 100 may take many forms; non-limiting examples of the computing device 100 include a fixed wireless access device, cell phone, tablet, internet of things (IoT) device, smart appliance, automotive or aircraft component, pager, personal electronic device, wearable electronic device, activity tracker, desktop computer, laptop, PC, and the like.

The implementations of the present disclosure may be described in the general context of computer code or machine-useable instructions, including computer-executable instructions such as program components, being executed by a computer or other machine, such as a personal data assistant or other handheld device. Generally, program components, including routines, programs, objects, components, data structures, and the like, refer to code that performs particular tasks or implements particular abstract data types. Implementations of the present disclosure may be practiced in a variety of system configurations, including handheld devices, consumer electronics, general-purpose computers, specialty computing devices, etc. Implementations of the present disclosure may also be practiced in distributed computing environments where tasks are performed by remote-processing devices that are linked through a communications network.

With continued reference to FIG. 1, computing device 100 includes bus 102 that directly or indirectly couples the following devices: memory 104, one or more processors 106, one or more presentation components 108, input/output (I/O) ports 110, I/O components 112, and power supply 114. Bus 102 represents what may be one or more busses (such as an address bus, data bus, or combination thereof). Although the devices of FIG. 1 are shown with lines for the sake of clarity, in reality, delineating various components is not so clear, and metaphorically, the lines would more accurately be grey and fuzzy. For example, one may consider a presentation component such as a display device to be one of I/O components 112. Also, processors, such as one or more processors 106, have memory. The present disclosure hereof recognizes that such is the nature of the art, and reiterates that FIG. 1 is merely illustrative of an exemplary computing environment that can be used in connection with one or more implementations of the present disclosure. Distinction is not made between such categories as "workstation," "server," "laptop," "handheld device," etc., as all are contemplated within the scope of FIG. 1 and refer to "computer" or "computing device."

Computing device 100 typically includes a variety of computer-readable media. Computer-readable media can be any available media that can be accessed by computing device 100 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data. Computer storage media includes RAM, ROM, EEPROM, flash memory or other memory technology, CD-ROM, digital versatile disks (DVD) or other optical disk storage, magnetic cassettes, magnetic tape, magnetic disk storage or other magnetic storage devices. Computer storage media does not comprise a propagated data signal.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 104 includes computer-storage media in the form of volatile and/or nonvolatile memory. Memory 104 may be removable, nonremovable, or a combination thereof. Exemplary memory includes solid-state memory, hard drives, optical-disc drives, etc. Computing device 100 includes one or more processors 106 that read data from various entities such as bus 102, memory 104 or I/O components 112. One or more presentation components 108 presents data indications to a person or other device. Exemplary one or more presentation components 108 include a display device, speaker, printing component, vibrating component, etc. I/O ports 110 allow computing device 100 to be logically coupled to other devices including I/O components 112, some of which may be built in computing device 100. Illustrative I/O components 112 include a microphone, joystick, game pad, satellite dish, scanner, printer, wireless device, etc.

A first radio 120 and second radio 130 represent radios that facilitate communication with one or more wireless networks using one or more wireless links. In aspects, the first radio 120 utilizes a first transmitter 122 to communicate with a wireless network on a first wireless link and the second radio 130 utilizes the second transmitter 132 to communicate on a second wireless link. Though two radios are shown, it is expressly conceived that a computing device with a single radio (i.e., the first radio 120 or the second radio 130) could facilitate communication over one or more wireless links with one or more wireless networks via both the first transmitter 122 and the second transmitter 132. Illustrative wireless telecommunications technologies include CDMA, GPRS, TDMA, GSM, and the like. One or both of the first radio 120 and the second radio 130 may carry wireless communication functions or operations using any number of desirable wireless communication protocols, including 802.11 (Wi-Fi), WiMAX, LTE, 3G, 4G, LTE, 5G, NR, VoLTE, or other VoIP communications. In aspects, the first radio 120 and the second radio 130 may be configured to communicate using the same protocol but in other aspects they may be configured to communicate using different protocols. In some embodiments, including those that both radios or both wireless links are configured for communicating using the same protocol, the first radio 120 and the second radio 130 may be configured to communicate on distinct frequencies or frequency bands (e.g., as part of a carrier aggregation scheme). As can be appreciated, in various embodiments, each of the first radio 120 and the second radio 130 can be configured to support multiple technologies and/or multiple frequencies; for example, the first radio 120 may be configured to communicate with a base station according to a cellular communication protocol (e.g., 4G, 5G, 6G, or the like), and the second radio 130 may configured to communicate with one or more other computing devices according to a local area communication protocol (e.g., IEEE 802.11 series, Bluetooth, NFC, z-wave, or the like).

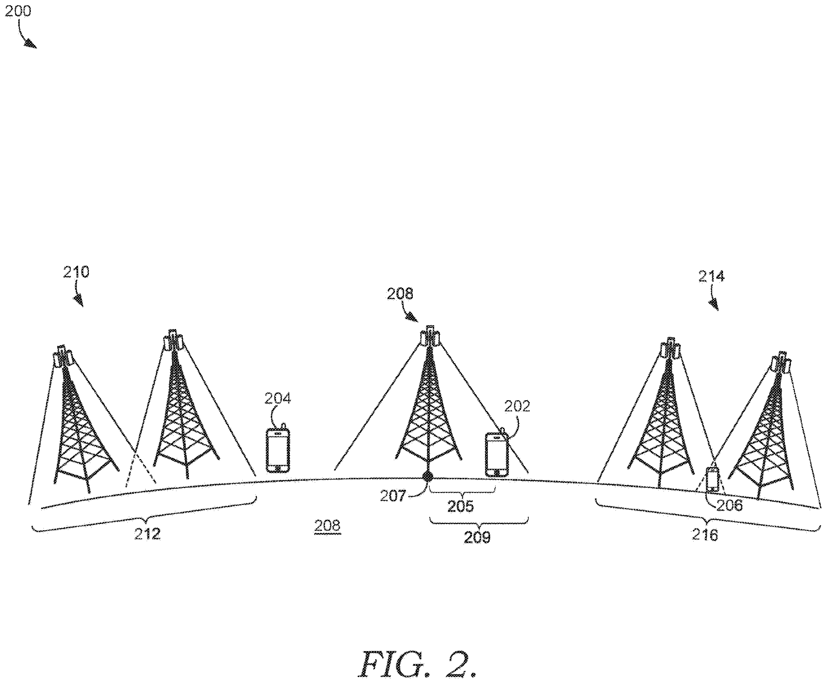

Turning now to Fig. 2, an exemplary network environment is illustrated in which implementations of the present disclosure may be employed. Such a network environment is illustrated and designated generally as network environment 200. At a high level the network environment 200 comprises a first UE 202, a second UE 204, and a third UE 206 that are at or near ground level of the earth 208, and one or more terrestrial base stations, including a first base station 208. The network environment 200 includes one more persistent coverage zones, including a first set of base stations 210 that create a first persistent coverage zone 212 and a second set of base stations 214 that create a second persistent coverage zone 216. Though referred to as 'persistent,' each of the first persistent coverage zone 212 and the second persistent coverage zone 216 may not necessarily provide uniform or uninterrupted coverage to a UE; instead, each of the first persistent coverage zone 212 and the second persistent coverage zone 216 is defined as an area where UEs are expected to have a high likelihood of persistent coverage with one or more radio access networks (e.g., based on a greater than threshold likelihood of successfully camping on a base station). Though each of the UEs are illustrated as cellular phones, a UE suitable for implementations with the present disclosure may be any computing device having any one or more aspects described with respect to Fig. 1. Similarly, though each of the base stations, including the first base station 208, are illustrated as macro cells, any scale or form or access point acting as a transceiver station for wirelessly communicating with a UE, including small cells, pico cells, and the like, are suitable for use with the present disclosure.

Each of the base stations of network environment 200 are configured to wirelessly communicate with UEs, such as the first UE 202, the second UE 204, and the third UE 206. In aspects, each of the terrestrial base stations may communicate with a UE using any wireless telecommunication protocol desired by a network operator, including but not limited to 3G, 4G, 5G, 6G, 802.11x and the like. The first base station 208 is associated with a network identifier (e.g., a Public Land Mobile Network number), which may be the same as the network identifier(s) of the first persistent coverage zone 212 and/or the second persistent coverage zone 216. Though not illustrated so as not to obscure the present disclosure, each of the first base station 210 may have a connection to one or more core network components. Each base station of network environment 200, including the first base station 208, may be said to provide wireless telecommunication coverage to a geographic area; as illustrated in Fig. 2, the first base station 208 may be said to serve a first geographic coverage area defined as a first distance 209 within a first base station location 207.

In order to connect to any base station, a UE must perform an active search to determine which base stations, if any, it is capable of connecting to. This process is known to many in the art and referred to herein as a `cell search,' and generally comprises acquiring time and frequency synchronization with a cell associated with a base station and detecting an identity of that cell by tuning to one or more specific frequencies, detecting/decoding synchronization signals, detecting/decoding a physical broadcast channel (PBCH), and detecting/decoding the physical downlink shared channel (PDSCH). When performing the cell search, a particular UE typically actively scans frequency bands in which it is capable of communicating for synchronization signals from a base station. Upon detection of synchronization signals from one or more base stations, the UE will perform a cell selection procedure (typically based on best quality of service metrics), perform an attachment procedure with the base station, and then being carrying out a wireless communication session. As noted earlier, cell search procedures are often quite taxing on a UE and, if performed constantly, can lead to rapid and undesirable depletion of a UE's battery. In order to prevent the constant active searching for signals during cell search, the present disclosure is directed to performing active cell searching only when a particular has reason to believe it is in or near a geographic coverage area of a base station.

With continued reference to Fig. 2, the network environment 200 is illustrated for an improved cell search paradigm with one or more terrestrial base stations. The third UE 206, being well-within the boundaries of the second persistent coverage zone 216 and connected one or more base stations of the second set of base stations 214, may not perform a cell search, whether on the basis that it is connected to the one or more base stations of the second set of base stations 214 or based on one or more key performance indicators (KPIs) of the connection exceeding a predetermined threshold. According to aspects of the present disclosure, the second UE 204, which may conventionally have performed an active cell search at a predetermined time interval, may not perform cell search because it has determined that it is not within a predetermined threshold distance of a geographic service area of a terrestrial base station. In aspects, the first UE 202 will perform cell search because it has determined that a UE distance 205 between the first UE 202 and the first base station location 207 is less than a predetermined threshold distance (alternatively that the first UE 202 is within a predetermined threshold distance of the first distance 209). In some aspects, the first UE 202 may perform the improved cell search of the present disclosure based on at least in part on a determination that a battery level of the first UE 202 is less than a first threshold; in other aspects, said improved cell search may be performed based at least in part on a determination that the battery level of the first UE 202 is between a first level and a second level).

To more efficiently conduct cell searching, a UE may only execute the cell search process based on a determination that the cell search is likely to be fruitful using anticipated coverage areas associated with one or more terrestrial base stations. In order to determine whether or not they should perform cell search, each of the first UE 202 and the second UE 204 will determine its current location (e.g., via GPS or other location data) and determine if they are in or within a predetermined threshold distance of what is anticipated to be a geographic service area associated with one or more terrestrial base stations. For example, the second UE 204 may not conduct a cell search (e.g., delay for a predetermined period of time and re-analyze) based on a determination that it is not in an anticipated coverage area or that it is not within a predetermined threshold distance (e.g., .1, .5, 1, 5, 10, 50 miles, or the like) of the anticipated coverage area of any terrestrial base stations. Conversely, the first UE 202 may determine that it is in or near an anticipated coverage area of a base station based on a determination that the first UE distance 205 is less than the first distance 209. In order to determine whether or not a particular UE is in or sufficiently near an anticipated coverage area of an terrestrial base station, it may query a record (i.e., dataset) that is locally stored on the particular UE and populated either by coverage information obtained from an external source and/or based on the UE's own observations, and compare the location of the UE with said anticipated coverage area data. In aspects, the locally stored dataset may additionally comprise information about a set of frequencies used by the one or more terrestrial base stations and a UE performing cell search for the one or more terrestrial base stations may perform the cell search procedure only on the set of frequencies without tuning to frequencies outside of the set of frequencies. In order to ensure the particular UE does not miss re-entry into a terrestrial coverage area, in some aspects the improved cell search disclosed herein may include performing a standard cell search at a predetermined interval (e.g., 30 minutes, 1 hour, 24 hours, or any desirable interval) that is relatively greater than a conventional cell search interval in addition to the targeted cell search for terrestrial base stations disclosed herein.

A UE may determine if it is in or sufficiently near a geographic service area based on information the UE receives from an external source. Such external source data may comprise actual coverage area, corresponding to the location of base stations and their respective service ranges, or estimated coverage area, corresponding to the location of base stations and a default (estimated) service range. External data relating to expected coverage area(s) may take any desirable form but would generally be usable to provide the UE with an indication that coverage can be expected at a particular location (or within a particular range of a particular location). The UE may be provided with an indication that coverage is to be expected in an area (e.g., a circular, ovular, or hexagonal area) at least partially defined by a radius (e.g., 5 miles) of a center point that at least approximately represents a base station location. For example, external coverage data may indicate that a circular area of coverage will be provided by a base station having a geographic location of 41°22'25"N 72°06'05"W and will have a radius of 5 miles. The UE can utilize the data to determine that is within the 5 mile radius (or within a predetermined distance of the 5 mile radius) of the base station location as a basis for activating a cell search for a terrestrial base station. External source expected coverage data may be localized (e.g., focused on a relatively small radius in the vicinity of a remote campsite) or may be provided for a predetermined range (e.g., 10, 50, or 100 miles) beyond a persistent coverage area such as the first or second persistent coverage zones 212,214.

External source expected coverage data may be manually obtained based on a user input or automatically obtained based on UE activity. A UE may receive an input from a user that requests the external source expected coverage data (e.g., if a user knows or suspects they will be (or are likely to be) beyond a persistent coverage area. For example, the user of the second UE 204 may be heading to a rural location where they do not expect constant telecommunication coverage; accordingly, the second UE 204 may receive a manual indication from a user that can be used to obtain the external source expected coverage data for a particular location or area. That external source expected coverage data can then be utilized by the second UE 204 at a later time to determine, for example, the expected coverage associated with the first base station 208.

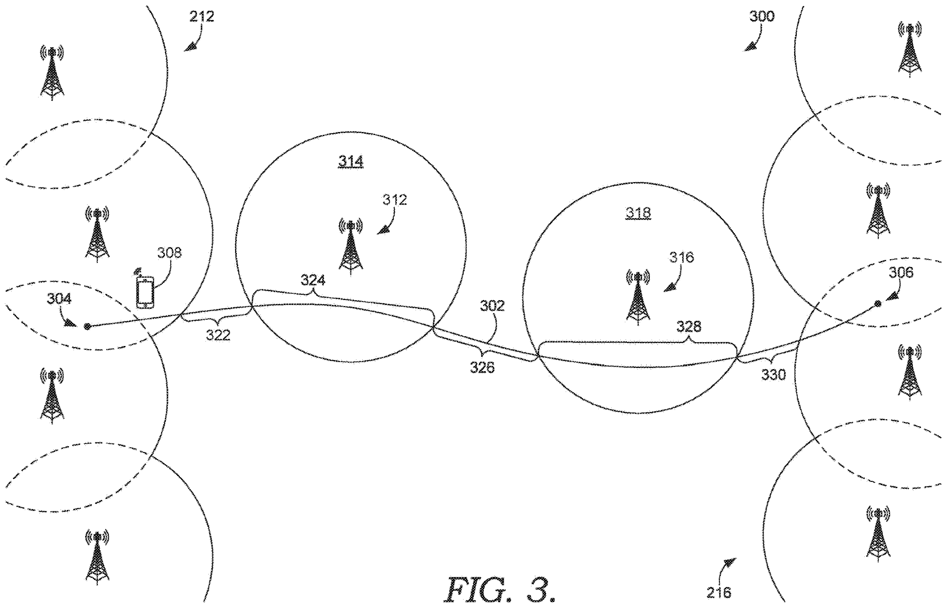

Turning now to Fig. 3, external source expected coverage data may additionally or alternatively be obtained automatically based on UE activity, as illustrated by a network environment 300. In such an aspect, a UE, such as a UE 308 (having any one or more features of any of the first, second, or third UEs of Fig. 2) may obtain external source expected coverage data based on a determination that the UE 308 is, or is likely, to depart the first persistent coverage zone 212. For example, the UE 308 may receive an indication that the UE 308 is expected to travel from a first location 304 to a second location 306 along a route 302; said indication may be based on a set of directions from an over the top navigation application, a travel itinerary, or the like. In response to the indication, the UE 308 may request external source expected coverage data for the route 302 prior to departure from the first persistent coverage zone 212 and store the externally-supplied dataset in local storage of the UE 308. Said external source expected coverage data may comprise an indication of the first persistent coverage zone 212, the second persistent coverage zone 216, a first base station 312, and a second base station 318, wherein each of the first base station 312 and the second base station 316 have any one or more of the features of the first base station 208 of Fig. 2. The dataset may comprise a first geographic coverage area 314 associated with the first base station 312 and a second geographic service area 318 associated with the second base station 316. Utilizing the dataset, the UE 308 may perform routine cell searching until it departs the first persistent coverage zone 212, not perform cell searching along a first segment 322 of the route 302 based on a determination the UE 308 is not in a coverage area, perform cell searching along a second segment 324 of the route 302 based on a determination the UE 308 is located in the first geographic coverage area 314, not perform cell searching along a third segment 326 of the route 302 based on a determination the UE 308 is not in a coverage area, perform cell searching along a fourth segment 328 of the route 302 based on a determination the UE 308 is located in the second geographic coverage area 318, not perform cell searching along a fifth segment 330 of the route 302 based on a determination the UE 308 is not in a coverage area, and then perform conventional cell searching upon entry into the second persistent coverage zone 216. In some aspects, the UE 308 may output an alert to a user when it has entered a coverage suitable for cell searching, such as the second segment 324 or the fourth segment 328 of the route 302. The alert may take the form of an audible tone from a speaker of the UE 308, a haptic feedback component of the UE 308 that causes the UE 308 to vibrate, an optical modification such as a change to a graphic user interface of the UE 308 or an on-board flashlight, or any other desirable form of alerting a user.

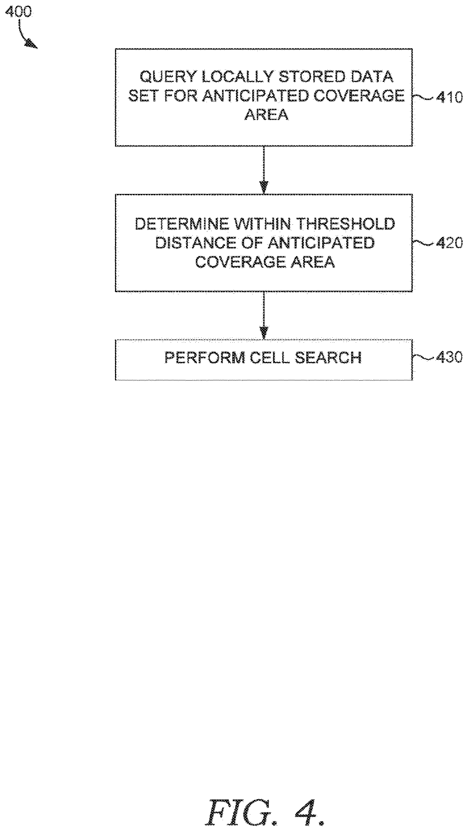

Turning now to Fig. 4, a flow chart representing a method 400 is provided. At a first step 410, a UE queries a locally stored dataset to determine an anticipated coverage area of one or more terrestrial base stations, according to any one or more aspects described with respect to Figs. 2-3. At a second step 420, the UE determines that it is in or within a predetermined range of an anticipated coverage area of one or more terrestrial base stations, according to any one or more aspects described with respect to Figs. 2-3. At a third step 430, the UE performs a cell search in an attempt to select and attach to the one or more terrestrial base stations, according to any one or more aspects described with respect to Figs. 2-3.

Many different arrangements of the various components depicted, as well as components not shown, are possible without departing from the scope of the claims below. Embodiments in this disclosure are described with the intent to be illustrative rather than restrictive. Alternative embodiments will become apparent to readers of this disclosure after and because of reading it. Alternative means of implementing the aforementioned can be completed without departing from the scope of the claims below. Certain features and subcombinations are of utility and may be employed without reference to other features and subcombinations and are contemplated within the scope of the claims

In the preceding detailed description, reference is made to the accompanying drawings which form a part hereof wherein like numerals designate like parts throughout, and in which is shown, by way of illustration, embodiments that may be practiced. It is to be understood that other embodiments may be utilized and structural or logical changes may be made without departing from the scope of the present disclosure. Therefore, the preceding detailed description is not to be taken in the limiting sense, and the scope of embodiments is defined by the appended claims and their equivalents.

Aspects of the present invention also reside in the following numbered clauses:
Clause 1. A system for coverage-based cell searching, the system comprising:
   one or more antennas configured to receive downlink signals from a base station; and
   one or more computer processing components configured to perform operations comprising:
      determining a location of the UE;
      querying a dataset stored locally on the UE comprising an anticipated coverage area associated with a terrestrial base station; and
      based on a determination that the location of the UE is within a predetermined threshold distance of the anticipated coverage area associated with the terrestrial base station, performing a cell search procedure; and
Clause 2. The system of clause 1, wherein the dataset further comprises a set of downlink frequencies used by the terrestrial base station to communicate with the UE.
Clause 3. The system of clause 2, wherein the cell selection procedure comprises tuning to the set of downlink frequencies used by the terrestrial base station without tuning to frequencies supported by the UE outside of the set of downlink frequencies used by the terrestrial base station to communicate with the UE.
Clause 4. The system of clause 3, wherein the dataset is created based an external data source.
Clause 5. The system of clause 4, wherein the dataset comprises a location and coverage radius of the anticipated coverage area of the terrestrial base station.
Clause 6. The system of clause 5, wherein the dataset comprises anticipated coverage areas for one or more terrestrial base stations for a predetermined range beyond the persistent coverage area.
Clause 7. The system of clause 6, wherein the dataset is created on the UE based on a determination that the UE is departing a persistent coverage area.
Clause 8. The system of clause 6, wherein the dataset is created based on an input received at the UE.
Clause 9. The system of clause 6, wherein the terrestrial base station is associated and a plurality of base stations forming the persistent coverage area, and each of the terrestrial base station and plurality of base stations have a common network identifier.
Clause 10. The system of clause 5, wherein the cell search procedure is performed based at least in part on a determination that a battery level of the UE is less than a predetermined threshold.
Clause 11. The system of clause 5, further comprising a feedback component configured to output an alert to a user based on a determination that the system has connected to the base station.
Clause 12. The system of clause 11, wherein the feedback component is a speaker and the alert is an audible tone.
Clause 13. The system of clause 11, wherein the feedback component is a haptic feedback component and the alert is a vibration.
Clause 14. A method for cell searching comprising:
   determining a planned route of a user equipment (UE);
   creating a dataset and storing it locally on the UE, wherein the dataset comprises an anticipated coverage area associated with a terrestrial base station, wherein the anticipated coverage area at least partially overlaps the planned route;
   determining a location of the UE along the planned route;
   determining, based on a query of the dataset stored locally on the UE, the location of the UE is within a predetermined threshold distance of the anticipated coverage area associated with the terrestrial base station; and
   performing a cell search procedure.
Clause 15. The method of clause 14, wherein the dataset further comprises a set of downlink frequencies used by the terrestrial base station to communicate with the UE.
Clause 16. The method of clause 15, wherein the cell selection procedure comprises tuning to the set of downlink frequencies used by the terrestrial base station without tuning to frequencies supported by the UE outside of the set of downlink frequencies used by the terrestrial base station to communicate with the UE.
Clause 17. The method of clause 14, wherein determining the planned route of the UE is based on an input received at the UE associated with an over the top navigation application.
Clause 18. The method of clause 14, wherein the cell search procedure is performed based at least in part on a determination that a battery level of the UE is less than a predetermined threshold.
Clause 19. The method of clause 14, wherein the UE is associated with a home network identifier and wherein performing the cell search procedure is based at least in part on a determination that the terrestrial base station is associated with the home network identifier.
Clause 20. A method for performing cell search in a wireless telecommunication network, the method comprising:
   determining a location of a user equipment (UE);
   querying a dataset stored locally on the UE comprising an anticipated coverage area associated with a terrestrial base station;
   based on a determination that the UE is within the anticipated coverage area, that the terrestrial base station is associated with a network identifier that is different than a home network identifier associated with the UE, and that the UE is not actively attempting to setup an emergency call, not performing a cell search procedure for the terrestrial base station; and
   based on a determination that the UE is within the anticipated coverage area and that the UE is actively attempting to setup an emergency call, performing the cell search procedure for the terrestrial base station.

## Claims

1. A system for coverage-based cell searching, the system comprising:
one or more antennas configured to receive downlink signals from a base station; and
one or more computer processing components configured to perform operations comprising:
determining a location of the UE;
querying a dataset stored locally on the UE comprising an anticipated coverage area associated with a terrestrial base station; and
based on a determination that the location of the UE is within a predetermined threshold distance of the anticipated coverage area associated with the terrestrial base station, performing a cell search procedure; and

2. The system of claim 1, wherein the dataset further comprises a set of downlink frequencies used by the terrestrial base station to communicate with the UE.

3. The system of claim 2, wherein the cell selection procedure comprises tuning to the set of downlink frequencies used by the terrestrial base station without tuning to frequencies supported by the UE outside of the set of downlink frequencies used by the terrestrial base station to communicate with the UE.

4. The system of claim 3, wherein the dataset is created based an external data source.

5. The system of claim 4, wherein the dataset comprises a location and coverage radius of the anticipated coverage area of the terrestrial base station.

6. The system of claim 5, wherein the dataset comprises anticipated coverage areas for one or more terrestrial base stations for a predetermined range beyond the persistent coverage area.

7. The system of claim 6, wherein the dataset is created on the UE based on a determination that the UE is departing a persistent coverage area, or wherein the dataset is created based on an input received at the UE; and/or:
wherein the terrestrial base station is associated and a plurality of base stations forming the persistent coverage area, and each of the terrestrial base station and plurality of base stations have a common network identifier.

8. The system of claim 5, wherein the cell search procedure is performed based at least in part on a determination that a battery level of the UE is less than a predetermined threshold.

9. The system of claim 5, further comprising a feedback component configured to output an alert to a user based on a determination that the system has connected to the base station; and preferably:
wherein the feedback component is a speaker and the alert is an audible tone; or
wherein the feedback component is a haptic feedback component and the alert is a vibration.

10. A method for cell searching comprising:
determining a planned route of a user equipment (UE);
creating a dataset and storing it locally on the UE, wherein the dataset comprises an anticipated coverage area associated with a terrestrial base station, wherein the anticipated coverage area at least partially overlaps the planned route;
determining a location of the UE along the planned route;
determining, based on a query of the dataset stored locally on the UE, the location of the UE is within a predetermined threshold distance of the anticipated coverage area associated with the terrestrial base station; and
performing a cell search procedure.

11. The method of claim 10, wherein the dataset further comprises a set of downlink frequencies used by the terrestrial base station to communicate with the UE.

12. The method of claim 11, wherein the cell selection procedure comprises tuning to the set of downlink frequencies used by the terrestrial base station without tuning to frequencies supported by the UE outside of the set of downlink frequencies used by the terrestrial base station to communicate with the UE.

13. The method of claim 10, wherein determining the planned route of the UE is based on an input received at the UE associated with an over the top navigation application.

14. The method of claim 10, wherein the cell search procedure is performed based at least in part on a determination that a battery level of the UE is less than a predetermined threshold; or
wherein the UE is associated with a home network identifier and wherein performing the cell search procedure is based at least in part on a determination that the terrestrial base station is associated with the home network identifier.

15. A method for performing cell search in a wireless telecommunication network, the method comprising:
determining a location of a user equipment (UE);
querying a dataset stored locally on the UE comprising an anticipated coverage area associated with a terrestrial base station;
based on a determination that the UE is within the anticipated coverage area, that the terrestrial base station is associated with a network identifier that is different than a home network identifier associated with the UE, and that the UE is not actively attempting to setup an emergency call, not performing a cell search procedure for the terrestrial base station; and
based on a determination that the UE is within the anticipated coverage area and that the UE is actively attempting to setup an emergency call, performing the cell search procedure for the terrestrial base station.
